# EUROPEAN PATENT SPECIFICATION

(11) **EP 1 322 046 B1**
(45) Date of publication and mention of the grant of the patent: **12.09.2007**
(21) Application number: 01130187.6
(22) Date of filing: 19.12.2001
(51) Int. Cl.: H04B 3/44

(54) **Submarine branching unit having asymmetrical architecture**
Unterseeverzweigungseinheit mit asymmetrischer Struktur
Unité de branchement sous marine ayant de structure asymétrique

(43) Date of publication of application: 25.06.2003
(73) Proprietor: Pirelli & C. S.p.A., 20123 Milano (IT)
(72) Inventor: Bianchi, Giuseppe, 20124 Milano (IT)
(74) Representative: Battipede, Francesco

(56) References cited:
- EP-A- 0 780 994
- PATENT ABSTRACTS OF JAPAN vol. 1998, no. 01, 30 January 1998 (1998-01-30) & JP 09 233004 A (KOKUSAI DENSHIN DENWA CO LTD <KDD>;K D D KAITEI CABLE SYST KK), 5 September 1997 (1997-09-05)
- PATENT ABSTRACTS OF JAPAN vol. 2000, no. 25, 12 April 2001 (2001-04-12) & JP 2001 230707 A (KDD SUBMARINE CABLE SYSTEMS INC), 24 August 2001 (2001-08-24)

## Description

### BACKGROUND OF THE INVENTION

The present invention relates to a submarine branching unit of an optical submarine cable communication system. More particularly, the present invention relates to a submarine branching unit having an asymmetrical architecture with a switching system designed to enhance the life of relay contacts by switching at zero current conditions.

Underwater or submarine cable systems were originally designed to provide a telecommunications link between two landing points separated by a body of water, such as between France and England. Optical fiber within the submarine cable could carry high bandwidth telecommunications across tens of kilometers without the need for amplification or regeneration.

As applications evolved that required transmission across larger distances, optical repeaters in the form of regenerators or amplifiers were required within the cable span, which mandated the availability of electrical power. Power feed lines and optical transmission lines were provided together in the submarine cables. These cable systems were soon improved to provide a telecommunications connection to three or more separate landing points by employing a branching unit at the junction of multiple cables under the body of water. A standard branching unit connected a main cable from one landing point and two spur cables from second and third landing points, respectively, in a Y-shaped arrangement.

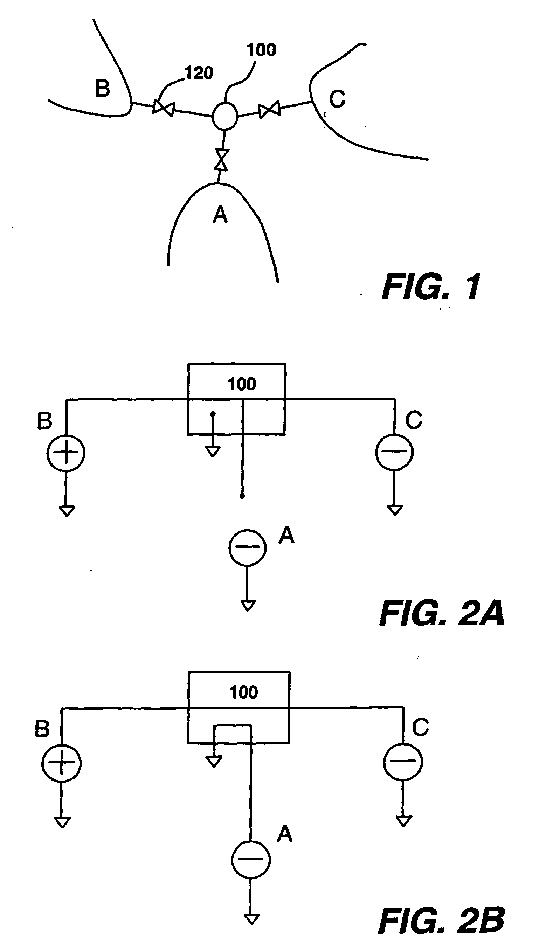

FIG. 1 illustrates a typical three landing point connection scheme. Branching unit 100 physically interconnects the cables, coordinates the routing of the cables, and provides for power switching between the cables, among other things. Conventionally, stations at the landing points power repeaters 120 within the three cables in a two-sided and one-sided arrangement. In particular, the transmission of electrical direct current along a power feed line of the intervening cables is established between any two of the landing points, and the third landing point passes electrical current through its respective cable to a ground at sea earth. Relays within the branching unit establish the two-sided (bilateral) and one-sided (unilateral) feeding configuration and help to change it if a fault arises in one of the branches. More elaborate schemes also exist for connecting multiple landing points and multiple branching units in a submarine network.

The act of configuring a branching unit refers to coordinating the application of power from the respective landing points by providing a first power connection (two-sided) between two landing points and a second power connection (one-sided) between the third landing point and sea earth. The two-sided power connection between the above two landing points can be either a two-end feeding as shown in FIGS. 2A, 2B, i.e., a generator is present at each of the two landing points or, alternatively, a one-end feeding, i.e., a generator is present at one of the landing points and the cable is grounded at the other of the two landing points.

FIGS. 2A and 2B illustrate the two configuration steps. As shown in FIG. 2A, a low current is caused to flow from landing point B to landing point C via branching unit 10. In this arrangement, the line from B to C is nominated as the main trunk, and the spur branch to landing point A is left in an open-circuit condition. FIG. 2B shows that after the main trunk has been established, the one-sided powering of the spur takes place by shunting the spur to sea earth at the branching unit and feeding the spur from landing point A. For a branching unit, the two-sided power connection may be established between any two of the three landing points.

Various publications describe this configuration process for symmetrical branching units. U.S. Patent No. 5,196,984 discloses a branching unit which employs electrical power feeding for repeaters and multiple branching units. The branching unit terminates three line cables and a sea earth and includes three high voltage element relays, only one of which is energized at a time. When electrical power is supplied between any two line cables, the third is isolated and connected to the sea earth. Short circuit or open circuit faults in one line cable may be isolated and connected to the sea earth, while allowing powering of the remaining two line cables that are free of faults.

Similarly, U.S. Patent No. 5,214,312 discloses a power feed line switching circuit for a submarine branching unit having first, second and third electrical paths connected in a Y-shaped connection, and first, second and third terminals connected respectively thereto. The power feed line switching circuit also has first, second and third relays each including a drive unit inserted in the first, second and third terminals and a switching unit for disconnecting the corresponding terminal and connecting the terminal to the ground. The relays control the connections between the terminals and electrical paths for establishing a one-end power feed line or a two-end power feed line to maintain power feed for repeaters and the submarine branching unit by the plurality of relays.

U.S. Patent No. 5,644,466 discloses a submarine cable branching system including a plurality of directional relays in respective power feed paths branched at a common node. Each of the directional relays is energized by a current flowing through the power feed path in a predetermined direction for energizing a corresponding switch provided in a different power feed path to establish a bilateral feed path and further a unilateral feed path. A bypassing switch is provided across one of the switches that forms the bilateral feed path such that the bypassing switch is urged to close in response to energization of a self-sustaining relay provided in the unilateral feed path.

Since the branching unit, repeaters and cables are laid underwater and are thus difficult to maintain, it is important that they have a high reliability to ensure uninterrupted telecommunications between the landing points. During power-up of the main trunk, however, the spur cable will acquire a charge related to the voltage drop at the branching unit and the length of the spur. Switching the spur cable to sea earth (typically the sea water) can cause a rapid discharge, which may damage contacts and relays with the branching unit. In particular, a relay that causes the spur cable to contact the sea earth is typically a high-voltage changeover relay. When actuation of the relay causes a make of the switch, an arc discharge will liberate a quantity of contact material. Acting as charge carriers, the liberated material may pass between the just opened contacts in the three-connection relay. An avalanche effect could take place that causes the main cable to discharge across the contact gap with large amperage, leading to imminent failure of the relay and connection of the main cable to sea earth. In this scenario, either it could be impossible to power the system up and configure the system or an oscillation could be initiated between the main trunk and spur (see, e.g., U.S. Patent No. 5,517,383 at columns 1 and 6). Consequently, it is advantageous to avoid current arcing across the relay contacts.

U.S. Patent Nos. 5,517,383 and 5,841,205 propose circuits to avoid this damage. In the '383 patent, an additional relay D and switch D1 are used to avoid dangerous arcing in the high voltage changeover relay such as C. Relay D is not a changeover relay and can withstand a greater amount of arcing without failing.

The '205 patent discloses the use of a two-stage relay to avoid damage from arcing. In this arrangement, the spur is disconnected from the main trunk when a defined current level is reached and then discharged by shorting its terminal station end (i.e., not underwater). After current in the main trunk ramps to a second level, the spur is connected to sea earth at the branching unit without arcing.

U.S. Patent No. 4,798,969 discloses a branching unit circuit that includes an auxiliary relay that prevents the spur branch from re-connecting to the main trunk when its current falls to zero. A relay K1 in the main trunk controls the switch connecting the spur branch to sea earth. A latch-up relay K4 in the spur branch holds the spur branch out of contact with the main trunk if relay K1 opens and relay K4 remains energized.

U.S. Patent No. 5,334,879 discloses a feeding system for a submarine cable communications system. The system includes a plurality of branching units provided on the communication cable and terminal stations each being connected through a repeater to one of the branching units. Each branching unit contains at least one switching circuit for switching to connect at least one of the repeaters to the communication cable or to ground depending on the current conducting through the feedline in the cable. The current thresholds of the switching circuits in the branching units are preferably different from each other.

U.S. Patent No. 5,491,368 shows a power feed path switching circuit for coupling a first, second and third station in a normal state. The first unit senses a first current flowing in a first path connecting the first and second stations and disconnects a second path connecting the third station when the first current is sensed. A second unit senses a second current flowing in the first path and discharges, gradually, the second path. A third unit senses current flow in the first path and grounds the second path when the third current is sensed.

WO 97/06610 discloses a branching unit for an optical fiber system that is not symmetrical. The branching unit has first and second connections for coupling two sections of trunk cable and a third connection for an optical fiber spur cable. A switching system is provided responsive to a control voltage placed on the spur cable to apply an earth ground to the conductor of the trunk cable. This is used to maintain a current path in one trunk section when a failure or break occurs in the other trunk section.

U.S. Patent No. 5,790,358 describes a feeding pass switching circuit. The switching circuit includes three terminals respectively connected to a feeding pass. The switching circuit is provided with a relay connected between a first terminal and a second terminal and activated by a current flowing in one direction. Another relay is connected between the second terminal and a third terminal and activated by a current flowing in either direction. One more relay is connected between the first terminal and the third terminal and activated by a current flowing in one direction.

EP 780,994 has the object of providing a feeding pass switching circuit capable of feeding power to any cable of three cables connected to the branching units BUs, thereby ensuring the feeding passes capable of feeding the power to other two cables even if one cable is troubled. To achieve the above object, a feeding pass switching circuit according to Fig. 1 of EP 780,994 comprises first, second and third terminals respectively connected to a feeding pass including five relays. A first relay has one end connected to the first terminal. The first relay is activable by a current flowing thereto from the first terminal. A third relay is connected to the second terminal, this relay being activable by a current flowing to either direction. A fifth relay is connected between the third terminal and the third relay, the fifth relay being activable by the current flowing to either direction and having a sensitively lower than that of the third relay. The third relay is disconnected from the fifth relay when the first relay is activated. Moreover, a connection point between the third relay and the fifth relay is grounded, and another end of the first relay is separated from the feeding pass switching circuit and grounded when the third relay is activated.

Applicants have discovered that conventional circuits for power feed equipment in submarine branching units do not ensure continued operation of good feed paths following the failure of a faulted feed path. Applicants have also discovered that conventional circuits do not provide adequate protection of relay contacts against possible arcing damage due to high current pulses as a consequence of cable discharge.

### SUMMARY OF THE INVENTION

Applicants have discovered that an asymmetrical configuration for a submarine branching unit that uses bypass relays and directional relays can help to avoid the problem of arcing that can occur when relay contacts actuate under high current pulse conditions.

Applicants have developed a submarine branching unit that has one cable earthed in its initial, quiescent, configuration and that only needs to be reconfigured when the cable network must be changed as a consequence of a fault on one branch.

In one aspect, a branching unit for interconnecting power feed lines of three submarine cables consistent with the present invention includes first, second, and third cable terminations each coupled to a power feed line of a respective submarine cable, and a ground termination. A re-configuration relay is positioned in series between the first cable termination and the ground termination. The re-configuration relay is unidirectional and has at least one contact positioned in series between the second and third terminations. The at least one contact is closed when the re-configuration relay is de-energized. Also, a bypass relay is positioned in series between the second and third cable terminations. The bypass relay has a contact positioned in parallel with the re-configuration relay and is open when the bypass relay is de-energized.

Preferably, configuration of the branching unit may occur first by the flow of a trunk current between the second and third cable terminations until the contact of the bypass relay closes and then by the flow of a spur current between the first cable termination and the ground termination. The branching unit may further comprise a ground-breaking relay and a grounding relay positioned in a re-configuration path electrically connected to an end of the re-configuration relay opposite the first cable termination. A contact of the ground-breaking relay disconnects both the re-configuration relay and the ground-breaking relay from the ground termination when the ground-breaking relay is energized. A contact of the grounding relay connects the other of the second and third cable terminations to the ground termination via a grounding path when the grounding relay is energized.

Also, configuration of the branching unit may occur first by flow of a spur current between the first cable termination and the ground termination until the at least one contact of the re-configuration relay opens, then by flow of a trunk current between the one of the second and third cable terminations and the ground termination via the re-configuration path, and then by energizing the ground-breaking and grounding relays.

Preferably, a latching relay is positioned in an electrical path of the contact of the bypass relay. The latching relay has a contact in parallel with the contact of the bypass relay. First and second grounding-path relays may also be positioned within the grounding path and configured to provide redundant connection of the one of the second and third cable terminations to the ground termination.

Preferably, the re-configuration relay and the grounding relay are configured to electrically connect the second and third cable terminations to form a main trunk when the re-configuration relay and grounding relays are de-energized. The re-configuration relay, ground-breaking relay, and grounding relay are configured to become energized substantially in the absence of current flow across contacts of the respective relays.

It is to be understood that both the foregoing general description and the following detailed description are exemplary and explanatory only and are intended to provide further explanation of the invention as claimed. The following description, as well as the practice of the invention, set forth and suggest additional advantages and purposes of the invention.

### BRIEF DESCRIPTION OF THE DRAWINGS

The accompanying drawings, which are incorporated in and constitute a part of this specification, illustrate embodiments of the invention and, together with the description, serve to explain the advantages and principles of the invention.
FIG. 1 is an illustration of a branching unit implemented in a submarine telecommunications system having three landing points.
FIG. 2A is a schematic diagram of a branching unit implemented in a submarine telecommunications system after the first step of configuration.
FIG. 2B is a schematic diagram of a branching unit implemented in a submarine telecommunications system after the second step of configuration.
FIG. 3 is a schematic diagram of a branching unit, in the quiescent state, implemented consistent with a first embodiment of the present invention.
FIG. 4 is a schematic diagram of the branching unit consistent with the first embodiment of the present invention operating in an original configuration.
FIG. 5 is a schematic diagram of the branching unit consistent with the first embodiment of the present invention operating in the first stage of being re-configured.
FIG. 6 is a schematic diagram of the branching unit consistent with the first embodiment of the present invention operating in the second stage of being re-configured.
FIG. 7 is a schematic diagram of the branching unit consistent with the first embodiment of the present invention operating in the third stage of being re-configured.
FIG. 8 is a schematic diagram of a branching unit consistent with a second embodiment of the present invention.
FIG. 9 is a schematic diagram of the branching unit consistent with the second embodiment of the present invention operating in an original configuration.
FIG. 10 is a schematic diagram of the branching unit consistent with the second embodiment of the present invention in a re-configured state.

### DETAILED DESCRIPTION OF THE PREFERRED EMBODIMENTS

Reference will now be made to various embodiments according to this invention, examples of which are shown in the accompanying drawings and will be obvious from the description of the invention. In the drawings, the same reference numbers represent the same or similar elements in the different drawings whenever possible.

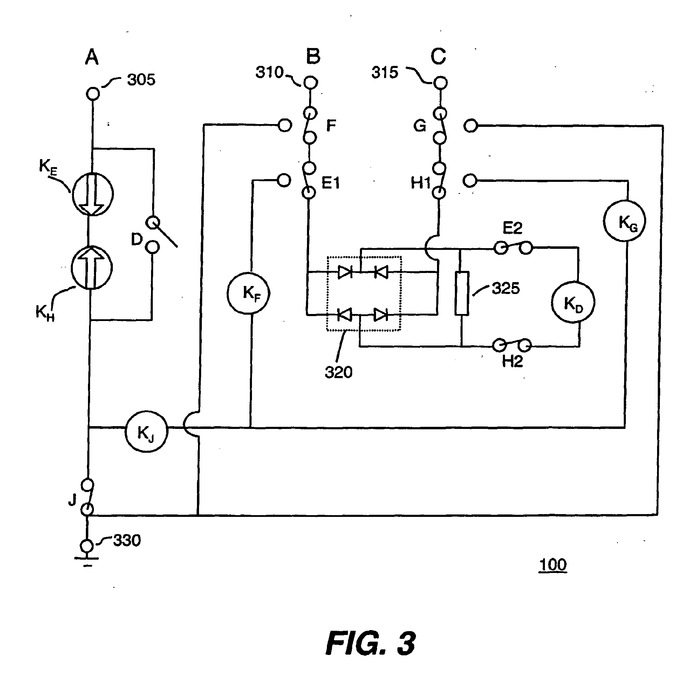

In accordance with the present invention, and as generally referred to as 100 in FIG. 3, a branching unit consistent with the principles of the present invention includes first, second, and third cable terminations each coupled to a power feed line of a respective submarine cable, a ground termination, and first, second, and third high-voltage relays.

As embodied in FIG. 3, branching unit 100 in FIG. 3 has three terminations or terminals 305, 310, and 315 that represent connections to respective landing points A, B, and C of FIG. 1. For sake of discussion, these cables attached to terminals 305, 310, and 315 are called cables A, B, and C, respectively. As will be understood, branching unit 100 is typically submerged in a large body of water like a sea or ocean, and submarine cables (not shown) travel from terminals 305, 310, and 315 to the landing points across distances. Naturally, each of the submarine cables may connect with other branching units before reaching its landing point.

The submarine cables include both optical transmission fiber and power feed lines. FIG. 3 illustrates only the circuitry in branching unit 100 that corresponds to the electrical power and switching aspects of that device and not the routing or maintenance of the optical communication system.

Branching unit 100 is asymmetrical. In other words, its layout is such that each of the terminals 305, 310, and 315 is not electrically equivalent to each of the others and powering of the branching unit is dependent on the arrangement of terminals 305, 310, and 315. FIG. 3 illustrates the original configuration for branching unit 100. In the asymmetrical design of the present invention, the branching unit does not need to undergo a configuration that requires internal switching of relays, which helps to preserve the integrity of those devices. Instead, switching of the relays is reserved for instances when the branching unit must be changed from its original configuration, typically due to a failure that occurs on one of the submarine cables. In the quiescent state shown in FIG. 3, the submarine cable A attached to terminal 305 (from landing station A) is grounded, i.e. set up as a spur cable, while the cables B and C attached to terminals 310 and 315 (from landing stations B and C) are connected together via branching unit 100, i.e. set up as a main trunk.

Branching unit 100 according to the first embodiment of the present invention includes circuitry with relays K_{D}, K_{E}, K_{F}, K_{G}, K_{H}, and K_{J}, whose coils are depicted in FIG. 3 as circles. The contacts of the relays are designated with corresponding letters. For instance, contact D in FIG. 3 is controlled by the coil of relay K_{D}. Likewise, contacts E1 and E2 are both controlled by the coil of relay K_{E}. Shown in its quiescent state, branching unit 100 of FIG. 3 is illustrated with all relay contacts in their "normal" state, i.e., the state where the contact lies when its relay is de-energized.

Each relay has a threshold pull-in current above which a magnetic field will be produced in its coil sufficient to energize the relay and to cause the contact to switch position. In addition, all relays shown in the diagram are non-latching relays, meaning that the contacts return to their original position when the coil changes from an energized to a de-energized state. The change from an energized state to a de-energized state occurs when the current flowing through the relay's coil drops below a threshold drop-out current, which is less than the relay's pull-in current level. Those relays drawn with an arrow inside the circle are unidirectional relays whose coils only become energized when the current flows in the direction of the arrow.

A by-pass element may be associated with one or more of the relays to by-pass from the relay coil all or part of the current in excess of the relay pull-in current. The by-pass element can be, for example, one or a series of more than one Zener diodes (depending on the voltage, power and current of each specific relay) in parallel with the relay coil. For bi-directional relays a diode bridge or an arrangement of Zener diodes, connected in a back-to-back configuration, can be used to maintain bi-directionality for the relay coil.

Branching unit 100 also has a diode bridge 320 positioned in the electrical path between terminals 310 and 315. Diode bridge 320 in combination with Zener diodes or another power supply unit (not shown) can be used to feed power to electrical equipment located within the branching unit, e.g., associated optical amplifiers 325. The Zener diodes or power supply unit also offer surge protection to the electrical equipment. In addition, diode bridge 320 helps to ensure that after relay K_{D} becomes energized it does not become de-energized if a short circuit in a submarine cable attached to terminals 310 or 315 causes a sudden reversal in current direction. A circuit arrangement other than the diode bridge shown in FIG. 3 may be used to effect the same result.

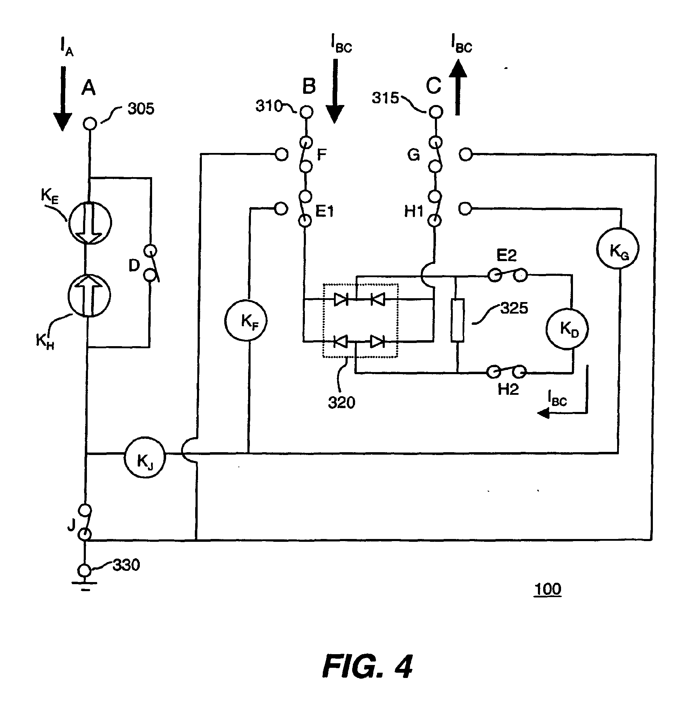

The following describes how current may be fed through branching unit 100 without a change from its original configuration. In a first step, current I_{BC} is caused to flow along the main trunk between terminals 310 and 315, e.g. between landing points B and C or vice versa. In passing between terminals 310 and 315, current I_{BC} flows through bypass relay K_{D}, causing contact D to close from its normally open position. The closing of contact D provides a current path from terminal 305 (landing point A) around directional relays K_{E} and K_{H}, which are positioned opposing each other, to sea earth (typically the sea water), as shown in FIG. 4. Thereafter, current I_{A} may be caused to flow along the spur branch between landing point A (terminal 305) and sea earth at terminal 330. In this sequence, only contact D is forced to close in the process of establishing full operation of branching unit 100, and the closing of contact D occurs with no current flowing through it. Consequently, possible damage to contact D due to arcing (that could have occurred in case of high current pulses) is avoided. As well, current I_{BC} in the main trunk between terminals 310 and 315 will be maintained independently of current I_{A} in the spur cable between terminals 305 and 330, i.e., the main trunk is not affected by a possible fault in the spur cable.

To power-down branching unit 100 during its operation in the original configuration of FIG. 4, the grounded spur cable attached to terminal 305 is powered down first. Then, the main trunk cable is powered down, which ensures that the switching of contact D occurs without current flowing through it. Branching unit 100 at that point returns to the condition depicted in FIG. 3.

A change from the original configuration of branching unit 100 may be made, for example, to accommodate a fault in one of the cables making up the main trunk. If a fault occurs in cable C between terminal 315 and landing point C, for instance, the branching unit may be re-configured to connect the cables at terminals 305 and 310 (cables A and B) as the main trunk. Alternatively, if a fault occurs in the cable between terminal 310 and landing point B, the branching unit may be re-configured to connect the cables at terminals 305 (cable A) and 315 (cable C) as the main trunk.

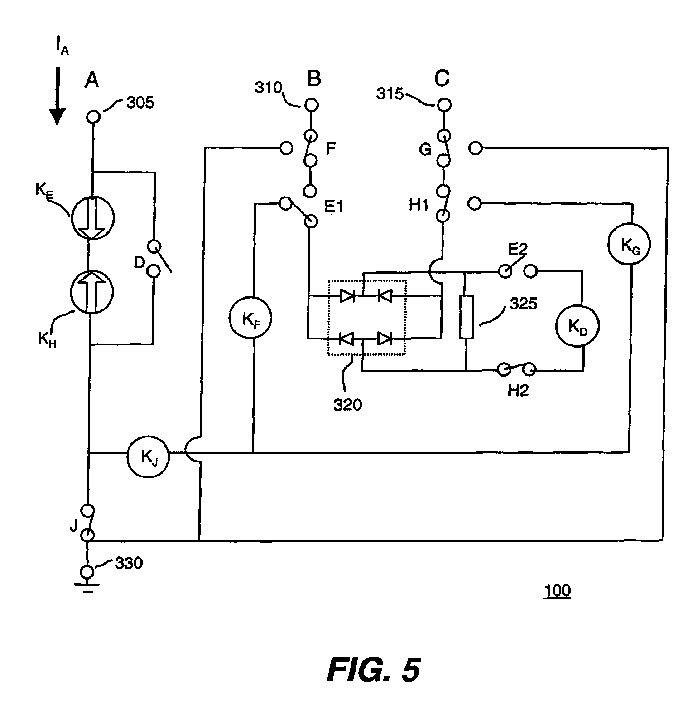

The original configuration of branching unit 100 may be changed by first causing current I_{A} to flow in the spur branch affiliated with terminal 305 rather than current I_{BC} in the main trunk. If the cable at terminal 305 is to be connected with the cable at terminal 315 to form a new main trunk and the cable at terminal 310 is to form a spur cable to sea earth, then current I_{A} is first caused to flow from terminal 305 to sea earth via terminal 330. FIG. 5 shows that as current I_{A} flows from terminal 305 to terminal 330, re-configuration relay K_{E} will become energized, causing the cables at terminals 310 and 315 to be separated by activating contacts E1 and E2. Contact E1 switches to a path to sea earth via a path through relays K_{F} and K_{J}, and contact E2 switches to an open position. The switching of contacts E1 and E2 occurs when no current is flowing in the main trunk to avoid any damage that may ensue from high current pulses and potential consequent arc discharge at the contact. As well, diode bridge 320 remains in series with the powered line.

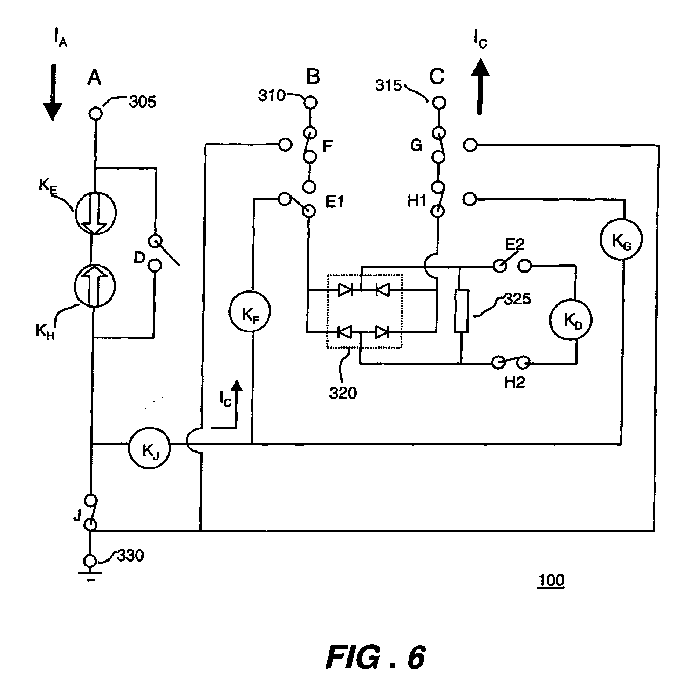

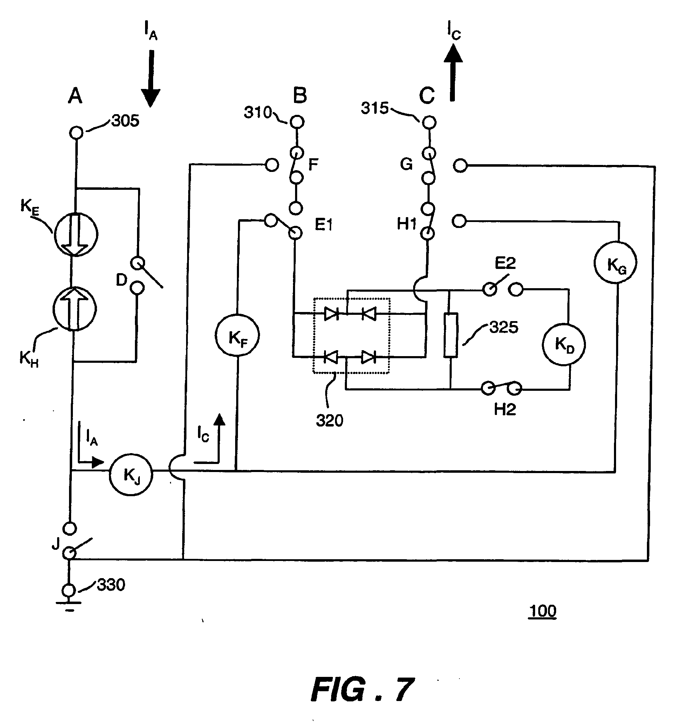

Following the switching of contacts E1 and E2, a current I_{C} is provided from terminal 315 to landing station C (directly connected or indirectly connected through one or more intermediate branching unit), as shown in FIG. 6. Gradually, current I_{C} is increased up to the magnitude of the current I_{A}. After or about the point at which I_{C}=I_{A}, both currents are increased together. When the current I_{C} (and therefore current I_{A}) exceeds the threshold pull-in current for ground-breaking relay K_{J}, (which is higher than the pull-in current for reconfiguration relays K_{E} and K_{H}) that relay will become energized and cause contact J to open, which breaks the contact from terminal 330 and ground, as shown in FIG. 7. Because the currents I_{C} and I_{A} are equal to each other when I_{C} exceeds the threshold pull-in current for relay K_{J}, the current flowing through contact J when it opens will be zero, avoiding any damaging arc. At this point, the cables from terminals 305 and 315 (between landing points A and C) are the main trunk for branching unit 100.

Thereafter, the voltages of the power feeding equipment at landing points A and C can be adjusted to further increase the current I_{C} (=I_{A}). When the current I_{C} exceeds the threshold pull-in current for grounding relay K_{F} (which is higher than the pull-in current for ground-breaking relay K_{J}), that relay will become energized, causing contact F to switch (not shown) to a direct path to ground. As with other contact switching in the present invention, contact F switches when no current is flowing through it if cable B attached to terminal 310 is either isolated or grounded at its opposite end. After contact F switches to ground, the cable attached to terminal 310 (landing station B) can be powered or not according to system requirements as a spur cable.

To power-down branching unit 100 from the configuration shown in FIG. 7 after contact F has been closed, the grounded spur cable B connected to terminal 310 is powered down first. Then, current I_{C} (=I_{A}) is decreased until it falls below the threshold drop-out current of relay K_{F}, which isolates the spur cable at terminal 310 from ground. While decreasing the value of currents I_{A} and I_{C} the voltages of the landing stations A and C are adjusted so that the voltage, at the point where the branching unit is located, is zero (this condition is the same which occurs during the reconfiguration phase of the branching unit). In this way, when the threshold drop-out current of relay K_{J} is reached and contact J closes, dangerous arc discharge is avoided. After this closure, the cable connected to terminal 315 should be powered down, followed by the cable connected to terminal 305.

Switching in the branching unit occurs in a similar manner if the branching unit is to be changed from its original configuration so that cable A at terminal 305 is connected with cable B at terminal 310 to form a new main trunk (between landing points A and B) and the cable at terminal 315 (landing point C) is connected to form a spur cable to sea earth. For this change, current I_{A} is first caused to flow in a direction from sea earth to terminal 305 (opposite that shown in FIGS. 4-7) in the original configuration of the branching unit. As this flow occurs, direction relay K_{H} will become energized, causing the cables at terminals 310 and 315 to be separated by activating contacts H1 and H2. Contact H1 switches to sea earth via a path through relays K_{G} and K_{J}, and contact H2 switches to an open position. Like the switching of contacts E1 and E2, the switching of contacts H1 and H2 occurs with no current flowing through them.

Following the switching of contacts H1 and H2, a current I_{B} (not shown) is caused to flow into terminal 310 (from landing point B). Gradually, current I_{B} is increased up to the magnitude of the current I_{A}. After or about the point at which I_{B}=I_{A}, both currents are increased together. When the current I_{B} (and therefore current I_{A}) exceeds the threshold pull-in current for relay K_{J}, that relay will become energized and cause contact J to open, which breaks the contact from terminal 330 and ground. Because the currents I_{B} and I_{A} are equal to each other when I_{B} exceeds the threshold pull-in current for relay K_{J}, the current flowing through contact J when it opens will be zero, avoiding any damaging arc. At this point, the cables from terminals 305 and 310 (between landing points A and B) are the main trunk for branching unit 100.

Thereafter, the voltages of the power feeding equipment at landing points A and B can be adjusted to further increase the current I_{B} (=I_{A}). When the current I_{B} exceeds the threshold pull-in current for relay K_{G} (which is higher than the pull-in current for ground-breaking relay K_{J}), that relay will become energized, causing contact G to switch to a direct path to ground. As with other contact switching in the present invention, contact G switches when no current is flowing through it because cable C attached to terminal 315 is either isolated or grounded. After contact G switches to ground, cable C attached to terminal 315 can be powered or not according to system requirements as a spur cable.

To power-down branching unit 100 from the configuration where cables between landing stations A and B form the main trunk, the grounded spur cable connected to terminal 315 is powered down first. Then, currents I_{A} and I_{B} are both decreased until they fall below the threshold drop-out current for relay K_{G}, which causes contact G to again isolate terminal 315 from ground. While decreasing the value of currents I_{A} and I_{B} the voltages of the landing stations A and B are adjusted so that the voltage, at the point where the branching unit is located, is zero (this condition is the same which occurs during the reconfiguration phase of the branching unit). In this way, when the threshold drop-out current of relay K_{J} is reached and contact J closes, dangerous arc discharge is avoided. After this closure, cable B connected to terminal 310 should be powered down, followed by cable A connected to terminal 305.

In a second embodiment of the present invention, additional relays and contacts are included to protect the contacts of branching unit 100 from faults, either short circuits or open circuits. This alternative embodiment minimizes the potential for damage to relay contacts that may occur if the contacts are not firmly closed and high currents pass through them when a fault exists on the line.

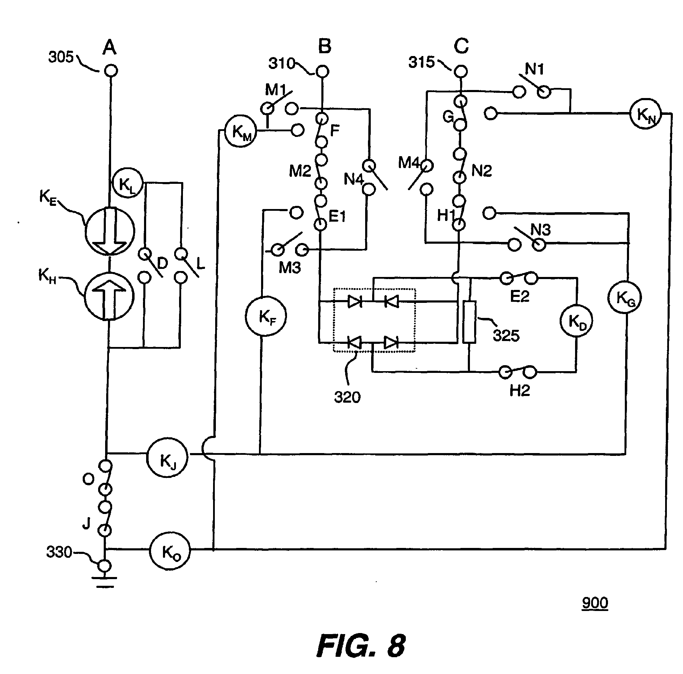

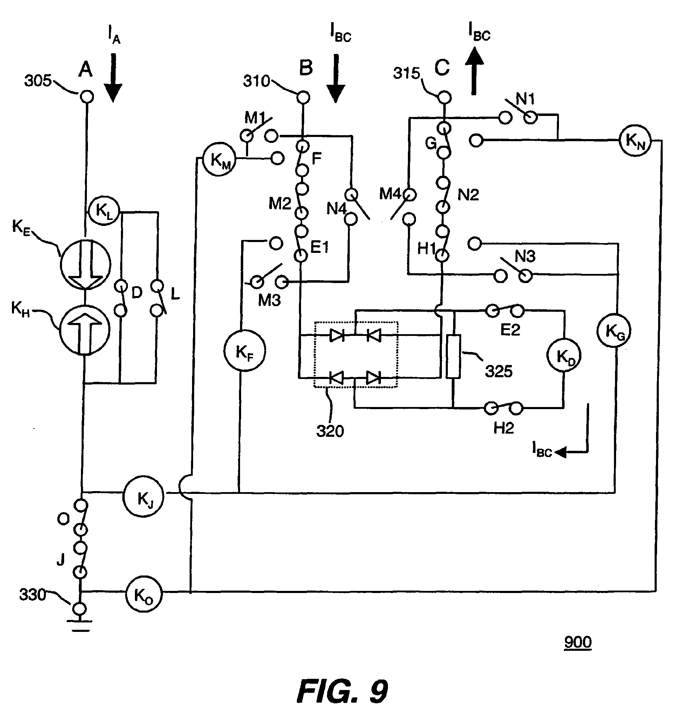

FIG. 8 is a schematic diagram of the second embodiment of the present invention showing a branching unit 900 that includes fault protection. Branching unit 900 of FIG. 8 adds relays K_{L}, K_{M}, K_{N}, and K_{O} and affiliated switches L, M1-M4, N1-N4, and O to the configuration of branching unit 100 of FIGS. 3-7. For the main trunk in the original configuration, which is formed of the cables attached to terminals 310 and 315, the additional switches M2 and N2 are naturally in a closed position so that a current such as I_{BC} can be established between landing points B and C. When relay K_{D} becomes energized from current I_{BC}, it closes contact D, which is normally open. After a current I_{A} is established in the spur cable attached to terminal 305, additional relay K_{L} will become energized and close latch-up contact L, as shown in FIG. 9. Contact L helps to protect contact D from damage if its contact is not firmly closed. If a fault occurs on the main trunk, it has no influence on the spur cable because contact L remains closed as long as sufficient current passes through relay K_{L}, even if contact D opens. Moreover, if a fault occurs in the spur cable, it has no effect on the main trunk since contact D is firmly closed.

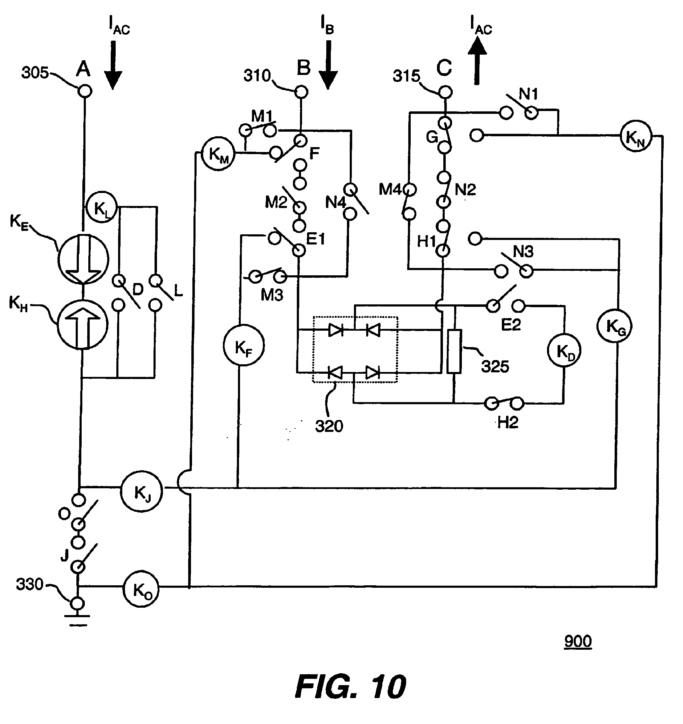

FIG. 10 illustrates a schematic diagram of branching unit 900 according to the second embodiment of the present invention if the original configuration is changed so that cables A and C form the main trunk and cable B is the spur cable. Re-configuration of branching unit 900 occurs in the same manner as described above for branching unit 100.

In this reconfigured state, when the spur cable is powered by current I_{B}, the relay K_{M}, is powered: contacts M1, M3 and M4 (normally open) close; M2 opens. Likewise, when K_{O} is powered, contact O opens. If a fault occurs on the spur cable B the fall of current through relay K_{O} and relay K_{M} does not affect the main trunk: furthermore, contacts O, M1-M4 are not subjected to dangerous discharges.

If a fault occurs on the main trunk, while the spur cable is not affected by the fault, the following phenomena take place:
a) the fall of current of relay K_{E}, causes the switch of contact E1. The contacts M2 and M3, which respectively isolate the main trunk from the spur branch and maintain the electrical continuity of the main trunk, protect contact E1 ;
b) the drop of current through K_{F} causes contact F to switch. Contacts M2 and M1, which respectively isolate the main trunk from the spur branch and maintain the electrical continuity of the spur branch, protect contact F;
c) the drop of current through K_{J} makes the contact J close. The relay K_{O}, powered by the current of the spur branch, maintains its contact O open, thus avoiding dangerous discharges to earth through contact J.

Furthermore, if we also consider the possibility of a transient reversal of the current above the pull-in current of relay K_{H}, contact H1 could open: the dangerous effects on its contacts are prevented by M4 which maintains the electrical continuity of the main trunk.

When the main trunk is configured between A and B while the spur branch is connected to C, relays K_{N} and K_{O} (see FIG. 10) behave in a symmetrical way to what said above for relays K_{M} and K_{O}.

Accordingly, the present invention provides a branching unit for submarine cables that enables the switching of relay contacts at times when no current is flowing through the contacts. Moreover, the branching unit is arranged such that a fault on either the main trunk or the spur cable will not affect operation of the other. Although not symmetrical, the branching unit may be re-configured with a simple sequence on power-up so that the main trunk is between any two of the unit's terminals.

It will be apparent to those skilled in the art that various modifications and variations can be made in the disclosed process and product without departing from the scope of the invention. For example, alternative relay placement may yield similar logical results. Other embodiments of the invention will be apparent to those skilled in the art from consideration of the specification and practice of the invention disclosed herein. It is intended that the specification and examples be considered as exemplary only, with a true scope of the invention being indicated by the following claims.

## Claims

1. A branching unit (100) for interconnecting power feed lines of three submarine cables, comprising:
a ground termination (330);
first, second, and third cable terminations (305, 310, 315) each coupled to a power feed line of a respective submarine cable;
a re-configuration relay (K_{E}, K_{H}) in series between the first cable termination (305) and the ground termination (330), the re-configuration relay being unidirectional and having at least one contact (E1, H1, E2, H2) positioned in series between the second (310) and third terminations (315), the at least one contact being closed when the re-configuration relay is de-energized;
**characterized in that** it further includes a bypass relay (K_{C}) in series between the second and third cable terminations, the bypass relay having a contact (D) positioned in parallel with the re-configuration relay and being open when the bypass relay is de-energized.

2. The branching unit (100) of claim 1, wherein configuration of the branching unit (100) occurs first by the flow of a trunk current between the second and third cable terminations (310, 315) until the contact (D) of the bypass relay (K_{D}) closes and then by the flow of a spur current between the first cable termination and the ground termination (330).

3. The branching unit (100) of claim 1, further comprising a ground-breaking relay (K_{J}) and a grounding relay (K_{F}, K_{G}) positioned in a re-configuration path electrically connected to an end of the re-configuration relay opposite the first cable termination.

4. The branching unit (100) of claim 3, wherein the at least one contact (E1, H1) of the re-configuration relay connects one (310; 315) of the second and third cable terminations to the re-configuration path when the re-configuration relay is energized.

5. The branching unit (100) of claim 4, wherein a contact (J) of the ground-breaking relay disconnects both the re-configuration relay and the ground-breaking relay from the ground termination when the ground-breaking relay is energized.

6. The branching unit (100) of claim 5, wherein a contact (F,G) of the grounding relay connects the other (315; 310) of the second and third cable terminations to the ground termination via a grounding path when the grounding relay is energized.

7. The branching unit (100) of claim 6, wherein configuration of the branching unit occurs first by flow of a spur current between the first cable termination and the ground termination until the at least one contact of the re-configuration relay opens, then by flow of a trunk current between the one (310; 315) of the second and third cable terminations and the ground termination via the re-configuration path, and then by energizing the ground-breaking and grounding relays.

8. The branching unit (900) of claim 3, further comprising a latching relay (K_{L}) positioned in an electrical path of the contact of the bypass relay the latching relay having a contact (L) in parallel with the contact of the bypass relay.

9. The branching unit (900) of claim 8, further comprising first and second grounding-path relays (K_{M}, K_{N}) positioned within the grounding path and configured to provide redundant connection of the one (310; 315) of the second and third cable terminations to the ground termination.

10. The branching unit (100) of any one of claims 3 to 9, wherein the re-configuration relay and the grounding relay are configured to electrically connect the second and third cable terminations to form a main trunk when the re-configuration relay and grounding relays are de-energized.

11. The branching unit (100) of claim 10, wherein the ground-breaking relay becomes energized at a lower current level than the grounding relay.

12. The branching unit (100) of claim 10, wherein the re-configuration relay, ground-breaking relay, and grounding relay are configured to become energized substantially in the absence of current flow across contacts of the respective relays.

13. Optical submarine telecommunication system including at least three cables, a submarine branching unit according to any one of claims 1-12 and at least two power generators to feed electrical power to the submarine branching unit.

## Patentansprüche

1. Abzweigende Einheit (100) zum Verbinden von Leistungszuführleitungen von drei Unterseekabeln mit:
einem Erdungsanschluss (330);
ersten, zweiten und dritten Kabelanschlüssen (305, 310, 315), von denen jeder mit einer Leistungszuführleitung eines jeweiligen Unterseekabels gekoppelt ist;
ein Neu-Konfigurations-Relais (K_{E}, K_{H}) in Serie zwischen dem ersten Kabelanschluss (305) und dem Erdungsanschluss (330), wobei das Neu-Konfigurations-Relais unidirektional ist und zumindest einen Kontakt (E1, H1, E2, H2) aufweist, der in Serie zwischen dem zweiten (310) und dritten Anschluss (315) angeordnet ist, wobei der zumindest eine Kontakt geschlossen wird, wenn das Neu-Konfigurations-Relais abgeschaltet wird;
**dadurch gekennzeichnet,**
**dass** diese weiter ein Umleitungsrelais (K_{C}) in Serie zwischen dem zweiten und dritten Kabelanschluss umfasst, wobei das Umleitungsrelais einen Kontakt (D) aufweist, der parallel mit dem Neu-Konfigurations-Relais angeordnet ist und der offen ist, wenn das Bypassrelais abgeschaltet ist.

2. Abzweigende Einheit (100) nach Anspruch 1, wobei eine Konfiguration der abzweigenden Einheit (100) zunächst durch den Fluss eines Hauptstroms zwischen dem zweiten und dritten Kabelanschluss (310, 315) auftritt, bis sich der Kontakt (D) des Umleitungsrelais (K_{D}) schließt und dann durch den Fluss eines Nebenstroms zwischen dem ersten Kabelanschluss und dem Erdungsanschluss (330).

3. Abzweigende Einheit (100) nach Anspruch 1, weiter mit einem Erdungs-unterbrechendem Relais (K_{J}) und einem erdenden Relais (K_{F}; K_{G}), das in einem Neu-Konfigurations-Weg angeordnet ist, der elektrisch mit einem Ende des Neu-Konfigurations-Relais entgegengesetzt des ersten Kabelanschlusses verbunden ist.

4. Abzweigende Einheit (100) nach Anspruch 3, wobei der zumindest eine Kontakt (E1, H1) des Neu-Konfigurations-Relais einen (310, 315) der zweiten und dritten Kabelanschlüsse mit dem Neu-Konfigurations-Weg verbindet, wenn das Neu-Konfigurations-Relais eingeschaltet ist.

5. Abzweigende Einheit (100) nach Anspruch 4, wobei ein Kontakt (J) des Erdungs-unterbrechenden Relais sowohl das Neu-Konfigurations-Relais als auch das Erdungs-unterbrechende Relais von dem Erdungsanschluss trennt, wenn das Erdungs-unterbrechende Relais eingeschaltet ist.

6. Abzweigende Einheit (100) nach Anspruch 5, wobei ein Kontakt (F, G) des erdenden Relais den anderen (315, 310) der zweiten und dritten Kabelanschlüsse mit dem Erdungsanschluss über einen erdenden Weg verbindet, wenn das erdende Relais eingeschaltet ist.

7. Abzweigende Einheit (100) nach Anspruch 6, wobei eine Konfiguration der abzweigenden Einheit zunächst durch einen Fluss eines Nebenstroms zwischen dem ersten Kabelanschluss und dem Erdungsanschluss auftritt, bis sich zumindest ein Kontakt des Neu-Konfigurations-Relais öffnet, dann durch einen Fluss eines Hauptstrom zwischen einem (310, 315) der zweiten und dritten Kabelanschlüsse und dem Erdungsanschluss über den Neu-Konfigurations-Weg und dann durch Einschalten des Erdungs-unterbrechenden und erdenden Relais.

8. Abzweigende Einheit (900) nach Anspruch 3, weiter mit einem Haftrelais (K_{L}) das in einem elektrischen Weg des Kontakts des Umleitungsrelais angeordnet ist, wobei das Haftrelais einen Kontakt (L) parallel mit dem Kontakt des Umleitungsrelais aufweist.

9. Abzweigende Einheit (900) nach Anspruch 8, weiter mit ersten und zweiten Erdungspfad-Relais (K_{M}, K_{N}), die innerhalb des erdenden Weges positioniert sind und konfiguriert sind, eine redundante Verbindung des einen (310, 315) des zweiten und dritten Kabelanschlusses mit dem Erdungsanschluss bereitzustellen.

10. Abzweigende Einheit (100) nach einem der Ansprüche 3-9, wobei das Neu-Konfigurations-Relais und das erdende Relais konfiguriert sind, elektrisch die zweiten und dritten Kabelanschlüsse zu verbinden, um einen Hauptstamm zu bilden, wenn das Neu-Konfigurations-Relais und das erdende Relais abgeschaltet ist.

11. Abzweigende Einheit (100) nach Anspruch 10, wobei das Erdungs-unterbrechende Relais bei einem niedrigeren Strompegel eingeschaltet ist als das erdende Relais.

12. Abzweigende Einheit (100) nach Anspruch 10, wobei das Neu-Konfigurations-Relais, das Erdungs-unterbrechende Relais und das erdende Relais konfiguriert sind, im Wesentlichen bei der Abwesenheit eines Stromflusses durch die Kontakte der jeweiligen Relais eingeschaltet zu werden.

13. Optisches Untersee-Kommunikationssystem mit zumindest drei Kabeln, einer Untersee-abzweigenden Einheit nach einem der Ansprüche 1-12 und zumindest zwei Leistungsgeneratoren, um elektrische Leistung zu der Untersee-abzweigenden Einheit zu führen.

## Revendications

1. Unité de dérivation (100) pour interconnecter des lignes d'alimentation électrique de trois câbles sous-marins, comprenant :
une terminaison de terre (330) ;
des première, deuxième et troisième terminaisons de câble (305, 310, 315) couplées chacune à une ligne d'alimentation électrique d'un câble sous-marin respectif ;
un relais de reconfiguration (K_{E}, K_{H}) en série entre la première terminaison de câble (305) et la terminaison de terre (330), le relais de reconfiguration étant unidirectionnel et ayant au moins un contact (E1, H1, E2, H2) positionné en série entre les deuxième (310) et troisième (315) terminaisons, ledit au moins un contact étant fermé que le relais de reconfiguration n'est pas excité ;
**caractérisée en ce qu'**elle comprend en outre un relais de contournement (K_{D}) en série entre les deuxième et troisième terminaisons de câble, le relais de contournement ayant un contact (D) positionné en parallèle avec le relais de reconfiguration et qui est ouvert quand le relais de contournement n'est pas excité.

2. Unité de dérivation (100) selon la revendication 1, dans laquelle la configuration de l'unité de dérivation (100) se produit d'abord par la circulation d'un courant principal entre les deuxième et troisième terminaisons de câble (310, 315) jusqu'à ce que le contact (D) du relais de contournement (K_{D}) se ferme, puis par la circulation d'un courant de ramification entre la première terminaison de câble et la terminaison de terre (330).

3. Unité de dérivation (100) selon la revendication 1, comprenant de plus un relais de rupture de terre (K_{J}) et un relais de mise à la terre (K_{F}, K_{G}) positionné dans un chemin de reconfiguration connecté électriquement à une extrémité du relais de reconfiguration opposée à la première terminaison de câble.

4. Unité de dérivation (100) selon la revendication 3, dans laquelle ledit au moins un contact (E1, H1) du relais de reconfiguration connecte l'une (310 ; 315) des deuxième et troisième terminaisons de câble au chemin de reconfiguration quand le relais de reconfiguration est excité.

5. Unité de dérivation (100) selon la revendication 4, dans laquelle un contact (J) du relais de rupture de terre déconnecte à la fois le relais de reconfiguration et le relais de rupture de terre d'avec la terminaison de terre lorsque le relais de rupture de terre est excité.

6. Unité de dérivation (100) selon la revendication 5, dans laquelle un contact (F, G) du relais de mise à la terre connecte l'autre (315 ; 310) des deuxième et troisième terminaisons de câble à la terminaison de terre par l'intermédiaire d'un chemin de mise à la terre quand le relais de mise à la terre est excité.

7. Unité de dérivation (100) selon la revendication 6, dans laquelle la configuration de l'unité de dérivation se produit d'abord par la circulation d'un courant de ramification entre la première terminaison de câble et la terminaison de terre jusqu'à ce que ledit au moins un contact du relais de reconfiguration s'ouvre, puis par la circulation d'un courant principal entre ladite une (310 ; 315) des deuxième et troisième terminaisons de câble et la terminaison de terre par l'intermédiaire du chemin de reconfiguration, et enfin par l'excitation des relais de rupture de terre et de mise à la terre.

8. Unité de dérivation (900) selon la revendication 3, comprenant en outre un relais de verrouillage (K_{L}) positionné dans un chemin électrique du contact du relais de contournement, le relais de verrouillage ayant un contact (L) en parallèle avec le contact du relais de contournement.

9. Unité de dérivation (900) selon la revendication 8, comprenant en outre des premier et deuxième relais de chemin de mise à la terre (K_{M}, K_{N}) positionnés dans le chemin de mise à la terre et configurés pour fournir une connexion redondante de ladite une (310 ; 315) des deuxième et troisième terminaisons de câble avec la terminaison de terre.

10. Unité de dérivation (100) selon l'une quelconque des revendications 3 à 9, dans laquelle le relais de reconfiguration et le relais de mise à la terre sont configurés pour connecter électriquement les deuxième et troisième terminaisons de câble pour former une branche principale lorsque le relais de reconfiguration et le relais de mise à la terre ne sont pas excités.

11. Unité de dérivation (100) selon la revendication 10, dans laquelle le relais de rupture de terre devient excité à un niveau de courant plus bas que le relais de mise à la terre.

12. Unité de dérivation (100) selon la revendication 10, dans laquelle le relais de reconfiguration, le relais de rupture de terre et le relais de mise à la terre sont configurés pour devenir excités substantiellement en l'absence de circulation de courant entre les contacts des relais respectifs.

13. Système de télécommunication sous-marine optique comprenant au moins trois câbles, une unité de dérivation sous-marine selon l'une quelconque des revendications 1 à 12 et au moins deux générateurs électriques pour fournir de l'énergie électrique à l'unité de dérivation sous-marine.
